# EUROPÄISCHE PATENTSCHRIFT

(11) **EP 4 201 051 B1**
(45) Veröffentlichungstag und Bekanntmachung des Hinweises auf die Patenterteilung: **02.07.2025**
(21) Anmeldenummer: 21762360.2
(22) Anmeldetag: 02.08.2021
(51) Int. Cl.: H04N 23/57

(54) **KAMERA, A-SÄULEN-ANORDNUNG UND FAHRZEUG**
CAMERA, A-PILLAR ARRANGEMENT AND VEHICLE
CAMÉRA, ENSEMBLE MONTANT DE PARE-BRISE ET VÉHICULE

(30) Priorität: 19.08.2020 DE 102020121700
(43) Veröffentlichungstag der Anmeldung: 28.06.2023
(73) Patentinhaber: Valeo Schalter und Sensoren GmbH, 74321 Bietigheim-Bissingen (DE)
(72) Erfinder: MEYER, Thorsten, 74321 Bietigheim-Bissingen (DE); BIEHLMAN, Bernd, 74321 Bietigheim-Bissingen (DE)
(74) Vertreter: Jauregui Urbahn, Kristian
(86) Internationale Anmeldenummer: PCT/EP2021/071522
(87) Internationale Veröffentlichungsnummer: WO 2022/037926

(56) Entgegenhaltungen:
- WO-A1-2018/129310
- WO-A1-2020/100656
- DE-A1- 10 340 496
- DE-B3- 102007 054 342
- DE-T5- 112012 003 221

## Beschreibung

Die vorliegende Erfindung betrifft eine Kamera, eine A-Säulen-Anordnung mit der Kamera und ein Fahrzeug mit der A-Säulen-Anordnung.

Herkömmlicherweise umfassen Fahrzeuge eine in einem vorderen Bereich des Fahrzeugs montierte Frontkamera zum Erfassen von Objekten vor dem Fahrzeug. Üblicherweise ist eine solche Frontkamera in einer zentralen oberen Position hinter der Windschutzscheibe des Fahrzeugs angebracht. Alternativ kann eine Frontkamera auch in einer zentralen niedrigen Position an einem Kühlergrill des Fahrzeugs angebracht sein.

Für eine Fernsicht mittels der Frontkamera ist eine Anbringung der Frontkamera an einem Kühlergrill des Fahrzeugs ungeeignet, da die Sicht durch nahe Objekte geringer Höhe verdeckt sein kann. Bei einer Anbringung der Frontkamera hinter der Winterschutzscheibe erfolgt die Aufnahme von Bildern durch die Windschutzscheibe hindurch. Hierbei kann die Bildqualität durch mangelnde optische Qualität der Windschutzscheibe beeinträchtigt sein. Beispielsweise können optische Verzerrungen auftreten. Außerdem kann eine hohe Reflexion an der Windschutzscheibe und eine geringe Transmission durch die Windschutzscheibe, insbesondere in Randbereichen des Kamera-Sichtfelds die Bildqualität mindern. Ferner kann eine Bildaufnahme durch solche Bereiche der Windschutzscheibe hindurch, die nicht von einem Scheibenwischer erfasst werden, aufgrund einer Verschmutzung der Windschutzscheibe beeinträchtigt sein.

Aus der CN 203681400 U und WO2018129310 A1 ist bekannt, eine Kamera in die A-Säule eines Fahrzeugs zu integrieren zur Überwachung eines von der A-Säule verdeckten Bereichs. Allerdings erfordert die Montage der Kamera in der A-Säule einen Teil der Trägerstruktur der A-Säule zu entfernen, um Platz für die Kamera zu schaffen. Dies mindert die Stabilität der A-Säule und ist somit aus Gründen der Insassensicherheit unvorteilhaft.

Alternativ kann für eine Montage einer Kamera in der A-Säule eines Fahrzeugs, die A-Säule breiter gestaltet werden. Dadurch wird jedoch der von der A-Säule verdeckte Bereich vergrößert, so dass der Sichtbereich des Fahrers stärker eingeschränkt wird.

DE102007054342B enthält eine seitenrückblickspiegellose Kraftfahrzeugrückblickeinrichtung, dass wenigstens ein am Fahrzeug montiertes elektronisches Kamerasystem (12) mit einem in Rückwärtsrichtung des Fahrzeugs gerichteten Blickwinkel enthält, dessen Objektiv (24) an der Fahrzeugkarosserie derart angebracht ist, dass es die Kontur des Fahrzeugs allenfalls geringfügig überragt, einen linksseitig eines Lenkrades angeordneten Bildschirm (14) zur Anzeige des von dem Kamerasystem aufgenommenen Verkehrsgeschehens im Bereich links hinter dem Fahrzeug und einen rechtsseitig eines Lenkrades angeordneten Bildschirm (14) zur Anzeige des von dem Kamerasystem aufgenommenen Verkehrsgeschehens im Bereich rechts hinter dem Fahrzeug. DE10340496A1 enthält eine Vorrichtung zur Visualisierung des von einer A-Säule verdeckten, für einen Fahrer nicht ohne Weiteres einsehbaren Bereichs (27), indem der Bereich (27) erfasst wird und dem Fahrer (16) auf einer Anzeigeeinheit (24) angezeigt wird.

Vor diesem Hintergrund besteht eine Aufgabe der vorliegenden Erfindung darin, eine verbesserte Kamera für eine A-Säule eines Fahrzeugs, eine A-Säulen-Anordnung mit der Kamera und ein Fahrzeug mit der A-Säulen-Anordnung zu schaffen.

Die verbesserte Kamera ist durch die Ansprüche 1-6 definiert, eine A-säulen-Anordnung ist durch die Ansprüche 7-11 definiert und ein Fahrzeug ist durch die Ansprüche 12-13 definiert.

Dadurch, dass ein von der Kamera innerhalb der A-Säule eingenommener Raum eine kleinere maximale Abmessung parallel zu einer Sehlinie der Kamera aufweist als seine maximale Abmessung parallel zu einer Längsrichtung der A-Säule ist, nimmt die Kamera in der A-Säule einen kleinen Raum in Bezug auf einen Querschnitt der A-Säule ein. Somit muss - in Querschnittsansicht - nur ein kleiner Teil der Trägerstruktur der Kamera entfernt werden, um Platz für die Kamera zu schaffen. Damit kann die A-Säule trotz der integrierten Kamera schmal und gleichzeitig stabil gestaltet werden. Bei einer schmalen A-Säule ist ein Sichtverdeckungswinkel (toter Winkel) vorteilhafterweise klein und die Sicht des Fahrers ist durch die A-Säule relativ wenig eingeschränkt. Ein weiterer Vorteil ist, dass eine stabile A-Säule einen guten Insassenschutz ermöglicht.

Außerdem wird mit der in die A-Säule integrierte Kamera eine alternative Anordnung einer Frontkamera zur Überwachung des vor dem Fahrzeug liegenden Bereiches, insbesondere des zentral vor dem Fahrzeug liegenden Bereiches geschaffen. Dabei werden Bilder der Umgebung - im Gegensatz zur hinter der Windschutzscheibe angeordneten Frontkamera - nicht durch die Windschutzscheibe hindurch aufgenommen, wodurch vermieden wird, dass ungünstige optische Eigenschaften der Windschutzscheibe die Bildqualität beeinträchtigen.

Die Kamera ist dazu eingerichtet, Bilddaten eines Bereichs vor dem Fahrzeug aufzunehmen. Die Kamera ist beispielsweise dazu eingerichtet, Bilddaten eines zentral vor dem Fahrzeug liegenden Bereichs aufzunehmen. Insbesondere ist die Kamera dazu eingerichtet, Bilder und/oder Videos eines Bereichs vor dem Fahrzeug aufzunehmen. Die Kamera ist insbesondere dazu eingerichtet, einen Überwachungsbereich vor dem Fahrzeug zu überwachen. Insbesondere können ruhende oder bewegte Objekte in der vorderen Umgebung des Fahrzeugs erfasst werden, wie beispielsweise Fahrzeuge, Personen, Tiere, Pflanzen, Hindernisse, Fahrbahnunebenheiten (z. B. Schlaglöcher oder Steine), Fahrbahnbegrenzungen, Verkehrszeichen oder Freiräume (z. B. Parklücken).

Die Kamera kann zum Beispiel für verschiedene Fahrunterstützungsfunktionen verwendet werden, wie beispielsweise für eine Geschwindigkeitsassistenz (adaptive Geschwindigkeitsregelung, Abstandsregelung, ACC: Adaptive Cruise Control), eine Lichtassistenz, eine Fernlichtassistenz, eine Spurassistenz, eine Spurhalteassistenz (LKA: Lane Keep Assist), eine Spurwechselassistenz, eine Notbremsassistenz (AEB: Automatic Emergency Braking), eine Lenkassistenz, eine Notlenkassistenz (AES: Automatic Emergency Steering), eine Stauassistenz (TJA: Traffic Jam Assist), einen Staupiloten (TJP, Traffic Jam Pilot), eine Autobahnassistenz (HWA, Highway Assist) und/oder einen Staupiloten (TJP, Traffic Jam Pilot).

Die Kamera kann zum Beispiel für verschiedene Fahrunterstützungsfunktionen mit einem SAE-Automatisierungsgrad 1, 2, 3, 4 oder 5 verwendet werden. Die Kamera kann zum Beispiel für Fahrunterstützungsfunktionen zum autonomen Fahren oder semi-autonomen Fahren verwendet werden, wobei das Fahrzeug teilautomatisch oder vollautomatisch gefahren/gesteuert wird.

Das SAE-Klassifikationssystem, das auf sechs verschiedenen Automatisierungsgraden basiert, wurde 2014 von SAE International, einer Standardisierungsorganisation für Kraftfahrzeuge, als J3016, "Taxonomy and Definitions for Terms Related to On-Road Motor Vehicle Automated Driving Systems" veröffentlicht. Es berücksichtigt das Maß des erforderlichen Eingreifens des Systems und der erforderlichen Aufmerksamkeit des Fahrers. Die SAE Automatisierungsgrade reichen von Stufe 0, die einem vollständig manuellen System entspricht, bis Stufe 5, die einem vollautomatischen System entspricht, bei der kein Fahrer mehr erforderlich ist. Ein autonomes Fahrzeug (auch als fahrerloses Auto, selbstfahrendes Auto und robotisches Auto bekannt) ist ein Fahrzeug, das in der Lage ist, seine Umgebung zu erfassen und ohne menschliche Eingabe zu navigieren und es entspricht dem SAE-Automatisierungsgrad 5.

Die Kamera ist insbesondere derart ausgestaltet und dazu eingerichtet, derart in der A-Säule angeordnet zu werden, dass ein von der Kamera innerhalb der A-Säule eingenommener Raum eine kleinere maximale Abmessung parallel zu einer Sehlinie der Kamera aufweist als seine maximale Abmessung parallel zu einer Längsrichtung der A-Säule ist.

Beispielsweise ist die Kamera vollständig innerhalb der A-Säule des Fahrzeugs angeordnet. In diesem Fall wird der von der Kamera innerhalb der A-Säule eingenommene Raum durch eine äußere Form der Kamera begrenzt. Alternativ ist die Kamera nur teilweise innerhalb der A-Säule angeordnet. In diesem Fall wird der von der Kamera innerhalb der A-Säule eingenommene Raum durch eine äußere Form des innerhalb der A-Säule befindlichen Teils der Kamera begrenzt.

Eine Sehlinie der Kamera ist beispielsweise eine optische Achse eines Objektivs der Kamera. In einem Fall, in dem die Kamera eine Umlenkvorrichtung aufweist zur Umlenkung eines von einem Objekt außerhalb des Fahrzeugs einfallenden Lichtstrahls zum Objektiv hin, bildet eine Sehlinie der Kamera einen Winkel zur optischen Achse des Objektivs.

Das Fahrzeug ist zum Beispiel ein Personenkraftwagen, ein Lastkraftwagen und/oder ein Bus. Die Kamera kann auch in Fahrzeugen eingesetzt werden, die autonom oder zumindest teilautonom betrieben werden können.

Die Kamera weist ein optisches System, insbesondere ein Objektiv, eine Linse oder dergleichen auf. Die Kamera weist beispielsweise ein Gehäuse, ein Objektiv und einen im Gehäuse und im Strahlengang des Objektivs angeordneten Bildsensor auf.

Die Kamera ist beispielsweise eine hochauflösende Kamera (High Definition-Kamera (HD-Kamera)).

Weiterhin weist die Kamera beispielsweise ein Verbindungselement auf. Das Verbindungselement dient beispielsweise zum Verbinden der Kamera mit einem fahrzeugseitigen Verbindungselement. Das Verbindungselement der Kamera ist zum Beispiel ein Steckverbinder. Das fahrzeugseitige Verbindungselement ist zum Beispiel ein fahrzeugseitiger Steckverbinder.

Die Kamera ist beispielsweise eine sogenannte "Satelliten-Kamera", die in ihrem Gehäuse lediglich die Abbildungsoptik und den Bildsensor jedoch keinen Bild-/Videoprozessor, keinen Speicher und keine Steuereinrichtung aufweist. Damit kann die Kamera kompakt gestaltet werden. Die Bilddaten der von der Kamera aufgenommenen Bilder werden in diesem Fall über eine Datenleitung von der Kamera an einen außerhalb der Kamera (insbesondere außerhalb der A-Säule) angeordneten Bild-/Videoprozessor und/oder Speicher gesendet. Weiterhin wird die Kamera über die Datenleitung durch eine außerhalb der Kamera (insbesondere außerhalb der A-Säule) angeordnete Steuereinrichtung gesteuert. Der außerhalb der Kamera angeordnete Bild-/Videoprozessor, der außerhalb der Kamera angeordnete Speicher und/oder die außerhalb der Kamera angeordnete Steuereinrichtung sind beispielsweise im Fahrzeug, z. B. in einer zentralen elektronischen Steuereinrichtung (ECU) des Fahrzeugs, angeordnet. Alternativ können eine, mehrere oder alle dieser Einheiten auch cloud-basiert realisiert werden. In diesem Fall weist die Kamera als Verbindungselement beispielsweise einen Sender und/oder Empfänger zum kabellosen Senden und Empfangen von Daten auf (z. B. RFID-Sender und -Empfänger, engl. radio-frequency identification).

Die A-Säule ist eine tragende Fahrzeugsäule, die das Dach des Fahrzeugs mit dem Karosserieunterbau verbindet. Die A-Säule ist insbesondere eine Verbindungsstrebe zwischen Fahrzeugdach und Karosserieunterbau. Die A-Säule ist eine linke oder eine rechte A-Säule des Fahrzeugs. Das Fahrzeug weist insbesondere zwei A-Säulen auf, die von der Fahrzeugfront aus gesehen links und rechts der Windschutzscheibe angeordnet sind. Die A-Säule weist beispielsweise Einfassungen für die Windschutzscheibe auf. Auch Scharniere der Fahrer- und Beifahrertür können an der A-Säule befestigt sein.

Die A-Säule dient unter anderem dem Schutz des Fahrzeuginnenraums im Falle eines Unfalls. Insbesondere bei einem Seitenanprall oder einem Überschlag des Fahrzeugs hat die A-Säule die Funktion, die Fahrgastkabine und somit die Insassen zu schützen. Dazu weist die A-Säule eine Trägerstruktur bzw. eine Verstärkungsstruktur auf. Beispielsweise weist die A-Säule einen, z. B. von einem Blech geformten, Hohlraum auf, in dem eine Verstärkungsstruktur aufgenommen ist. Die Versteifungsstruktur ist beispielsweise ein Versteifungsrohr.

Die A-Säule ist in einer Seitenansicht des Fahrzeugs beispielsweise schräg angeordnet relativ zu einer horizontalen Ebene des Fahrzeugs bzw. zu einer Fahrbahnebene. Insbesondere ist eine Längsachse der A-Säule in einer Seitenansicht gegenüber der horizontalen Ebene des Fahrzeugs bzw. der Fahrbahnebene geneigt. Insbesondere ist die A-Säule derart geneigt, dass ein oberes Ende der A-Säule sich in einer Fahrzeuglängsrichtung weiter hinten befindet als ein unteres Ende der A-Säule. Gemäß einer Ausführungsform des ersten Aspekts weist die Kamera ein Teleobjektiv auf und ist dazu eingerichtet, Bilddaten eines Fernbereichs vor dem Fahrzeug aufzunehmen.

Dadurch kann ein Fernbereich vor dem Fahrzeug mittels der Kamera überwacht werden.

Das Teleobjektiv hat beispielsweise eine Brennweite von 80 mm oder größer, 135 mm oder größer, 180 mm oder größer und/oder 200 mm oder größer.

Der von dem Gehäuse, dem Objektiv und dem Verbindungselement innerhalb der A-Säule eingenommene Raum betrifft eine äußere Abmessung des Gehäuses, Objektivs und Verbindungselements gemeinsam. Mit anderen Worten steht der von dem

Gehäuse, dem Objektiv und dem Verbindungselement innerhalb der A-Säule eingenommene Raum im Zusammenhang mit einer äußeren Umhüllenden dieser Elemente.

In dem Fall, in dem die Kamera vollständig innerhalb der A-Säule des Fahrzeugs angeordnet ist, wird der von dem Gehäuse, dem Objektiv und dem Verbindungselement innerhalb der A-Säule eingenommene Raum durch eine umhüllende Form, die das Gehäuse, das Objektiv und das Verbindungselement gemeinsam umhüllt, begrenzt. In dem Fall, in dem die Kamera nur teilweise innerhalb der A-Säule angeordnet ist, wird der von dem Gehäuse, dem Objektiv und dem Verbindungselement innerhalb der A-Säule eingenommene Raum durch eine umhüllende Form, die die innerhalb der A-Säule befindlichen Teile des Gehäuses, des Objektivs und des Verbindungselements gemeinsam umhüllt, begrenzt.

Gemäß einer weiteren Ausführungsform des ersten Aspekts ist die Kamera dazu eingerichtet, derart in der A-Säule angeordnet zu werden, dass ein Objektiv der Kamera aus der A-Säule in Fahrzeugrichtung nach vorne vorsteht.

Das heißt, dass nur ein Abschnitt der Kamera innerhalb der A-Säule angeordnet ist, während der restliche Abschnitt der Kamera, insbesondere das Objektiv oder ein Abschnitt des Objektivs, aus der A-Säule in Fahrzeugrichtung nach vorne vorsteht. Somit nimmt die Kamera innerhalb der A-Säule einen kleineren Raum ein. Insbesondere nimmt die Kamera in Bezug auf einen Querschnitt der A-Säule (ein Querschnitt senkrecht zur Längsrichtung der A-Säule) einen kleineren Raum ein. Damit kann die A-Säule trotz der integrierten Kamera schmal und gleichzeitig stabil gestaltet werden. Gemäß einer weiteren Ausführungsform des ersten Aspekts weist die Kamera ein Gehäuse auf und ein Objektiv, das an einer ersten Gehäusewand angeordnet ist. Weiterhin weist die Kamera ein Verbindungselement zur Verbindung der Kamera mit einem fahrzeugseitigen Verbindungselement auf. Das Verbindungselement ist an einer zweiten Gehäusewand angeordnet, wobei die zweite Gehäusewand mit der ersten Gehäusewand einen Winkel bildet.

Dadurch kann ein teilweise aus dem Kameragehäuse vorstehendes kameraseitiges Verbindungselement, ein mit einem kameraseitigen Verbindungselement verbundenes fahrzeugseitiges Verbindungselement und/oder ein Kabelabgang des fahrzeugseitigen Verbindungselements günstig in der A-Säule angeordnet werden, so dass sie nur einen kleinen Raum in Bezug auf einen Querschnitt der A-Säule einnehmen. Insbesondere ist die zweite Gehäusewand des Kameragehäuses nicht parallel zur ersten Gehäusewand. Beispielsweise ist die erste Gehäusewand parallel zu einer vertikalen Richtung des Fahrzeugs und/oder senkrecht zu einer optischen Achse des Kameraobjektivs. Beispielsweise ist die zweite Gehäusewand senkrecht zu einer Längsachse der A-Säule. Beispielsweise ist die zweite Gehäusewand senkrecht zur ersten Gehäusewand.

Dadurch, dass die Kamera eine zweite Platine aufweist, die hinter der ersten Platine mit dem Bildsensor angeordnet ist, können auch auf der zweiten Platine Elektronik-Bauteile angeordnet werden. Zudem ist die erste Platine mit dem Bildsensor vor einer Positionsverschiebung besser geschützt, da zwischen ihr und beispielsweise einem Steckverbinder zum Verbinden mit einem fahrzeugseitigen Steckverbinder die zweite Platine angeordnet ist. Eine hohe Positionsgenauigkeit der Platine mit dem Bildsensor relativ zu dem Kameraobjektiv ist insbesondere bei einer hochauflösenden Kamera von Bedeutung für die Abbildungsqualität.

Dadurch, dass die zweite Platine nach oben versetzt zur ersten Platine angeordnet ist, kann eine Kamera mit einer zweiten Platine verwendet werden und dennoch der von der Kamera innerhalb der A-Säule in Bezug auf einen Querschnitt der A-Säule eingenommene Raum klein gehalten werden.

Gemäß einer weiteren Ausführungsform des ersten Aspekts weist die Kamera ein Verbindungselement auf, das dazu eingerichtet ist, mit einem fahrzeugseitigen Verbindungselement verbunden zu werden, um von der Kamera aufgenommene Bilddaten an einen außerhalb der Kamera angeordneten Bildprozessor zu senden, von der Kamera aufgenommene Bilddaten auf einem außerhalb der Kamera angeordneten Speicher zu speichern, Steuerbefehle einer außerhalb der Kamera angeordneten Steuereinheit zu empfangen und/oder die Kamera mit Strom zu versorgen. Dadurch, dass ein Bild-/Videoprozessor, ein Speicher und/oder eine Steuervorrichtung zur Steuerung der Kamera außerhalb der Kamera und insbesondere außerhalb der A-Säule angeordnet sind, kann die Kamera kompakt gehalten werden und der von der Kamera innerhalb der A-Säule verbrauchte Raum klein gehalten werden. Gemäß einem zweiten Aspekt wird eine A-Säulen-Anordnung für ein Fahrzeug vorgeschlagen. Die A-Säulen-Anordnung weist eine A-Säule und eine wie vorstehend beschriebene Kamera auf. Weiterhin ist die Kamera derart ausgestaltet und in der A-Säule angeordnet, dass ein von der Kamera innerhalb der A-Säule eingenommener Raum eine kleinere maximale Abmessung parallel zu einer Sehlinie der Kamera aufweist als seine maximale Abmessung parallel zu einer Längsrichtung der A-Säule ist.

Gemäß einer Ausführungsform des zweiten Aspekts weist die A-Säulen-Anordnung eine transparente Abdeckung auf, und ist die Kamera dazu eingerichtet, Bilder von einem Bereich vor dem Fahrzeug durch die transparente Abdeckung hindurch aufzunehmen.

Gemäß einer weiteren Ausführungsform des zweiten Aspekts weist die transparente Abdeckung eine geringe optische Verzerrung auf.

Dadurch können durch die transparente Abdeckung hindurch Bilder hoher Qualität aufgenommen werden. Insbesondere im Falle einer hochauflösenden Kamera ist eine gute optische Eigenschaft der transparenten Abdeckung vorteilhaft.

In Ausführungsformen weist die transparente Abdeckung einen hohen optischen Transmissionsgrad und/oder einen niedrigen Reflexionsgrad auf.

Insbesondere ist eine optische Verzerrung und ein Reflexionsgrad der transparenten Abdeckung niedriger und/oder ist ein Transmissionsgrad der transparenten Abdeckung höher als es bei einer herkömmlichen Windschutzscheibe der Fall ist.

Gemäß einer weiteren Ausführungsform des zweiten Aspekts ist die transparente Abdeckung kuppelförmig.

Dadurch kann ein Abschnitt der Kamera, insbesondere ein Abschnitt des Objektivs, aus der A-Säule hervorstehen. Zudem kann eine aus aerodynamischer Sicht günstige Form der transparenten Abdeckung erreicht werden.

Gemäß einer weiteren Ausführungsform des zweiten Aspekts weist die transparente Abdeckung eine äußere Oberfläche auf. Zudem weist die A-Säulen-Anordnung eine Reinigungsvorrichtung zur Reinigung zumindest eines Teils der äußeren Oberfläche der transparenten Abdeckung auf.

Dadurch können Verschmutzungen auf der transparenten Abdeckung vermieden und/oder entfernt werden. Damit kann für eine für eine gute Bildqualität erforderliche Sauberkeit der transparenten Abdeckung gesorgt werden.

Gemäß einem dritten Aspekt wird ein Fahrzeug mit mindestens einer wie vorstehend beschriebenen A-Säulen-Anordnung vorgeschlagen.

Gemäß einer Ausführungsform des dritten Aspekts weist das Fahrzeug zwei A-Säulen-Anordnungen auf, wobei die innerhalb der A-Säulen montierten Kameras jeweils ein Teleobjektiv aufweisen. Außerdem weist das Fahrzeug eine zentral montierte Frontkamera mit einem Normalobjektiv oder einem Weitwinkelobjektiv auf.

Dadurch, dass das Fahrzeug sowohl die beiden in den A-Säulen verbauten Telekameras als auch die zentral montierte Weitwinkel- oder Normalwinkelkamera aufweist, kann die Umgebung vor dem Fahrzeug mittels dreier Kameras und zwar sowohl im Fernbereich als auch im Nahbereich überwacht werden.

Die zentral montierte Weitwinkel- oder Normalwinkelkamera ist beispielsweise eine Kamera mittlerer räumlicher Auflösung. Sie ist beispielsweise hinter einer Windschutzscheibe montiert. Die beiden Telekameras sind beispielsweise hochauflösende Kameras.

Die für die vorgeschlagene Kamera beschriebenen Ausführungsformen und Merkmale gelten für die beschriebene A-Säulen-Anordnung und das Fahrzeug entsprechend und umkehrt.

Die vorliegend genannten Einheiten, wie etwa die Steuervorrichtung, der Bild-/Videoprozessor und der Speicher, können jeweils hardwaretechnisch und/oder softwaretechnisch implementiert sein. Bei einer hardwaretechnischen Implementierung kann die entsprechende Einheit als Vorrichtung oder als Teil einer Vorrichtung, zum Beispiel als Computer oder als Mikroprozessor ausgebildet sein. Außerdem können die ein oder mehreren Einheiten, wie etwa die Steuervorrichtung, der Bild-/Videoprozessor und der Speicher, zusammen in einer einzigen Hardware-Vorrichtung implementiert sein, und sie können zum Beispiel einen Speicher, Schnittstellen und dergleichen teilen. Die Einheiten, wie etwa die Steuervorrichtung, der Bild-/Videoprozessor und der Speicher, können auch in separaten Hardware-Bauteilen realisiert sein. Bei einer softwaretechnischen Implementierung kann die jeweilige Einheit (wie etwa die Steuervorrichtung, der Bild-/Videoprozessor und der Speicher) als Computerprogrammprodukt, als eine Funktion, als eine Rechenroutine, als ein Algorithmus, als Teil eines Programmcodes oder als ausführbares Objekt ausgebildet sein.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein Fahrzeug mit einer A-Säulen-Anordnung;
- Fig. 2: zeigt eine Teil-Querschnittsansicht einer A-Säulen-Anordnung des Fahrzeugs aus Fig. 1 gemäß einer ersten Ausführungsform;
- Fig. 3: veranschaulicht einen von einer Kamera innerhalb einer A-Säule der A-Säulen-Anordnung aus Fig. 2 eingenommenen Raum;
- Fig. 4: zeigt eine Teil-Querschnittsansicht einer A-Säulen-Anordnung des Fahrzeugs aus Fig. 1 gemäß einer zweiten Ausführungsform;
- Fig. 5: veranschaulicht einen von einer Kamera innerhalb einer A-Säule der A-Säulen-Anordnung aus Fig. 4 eingenommenen Raum;
- Fig. 6: zeigt eine Teil-Querschnittsansicht einer A-Säulen-Anordnung des Fahrzeugs aus Fig. 1 gemäß einer dritten Ausführungsform;
- Fig. 7: veranschaulicht einen von einer Kamera innerhalb einer A-Säule der A-Säulen-Anordnung aus Fig. 6 eingenommenen Raum;
- Fig. 8: zeigt eine schematische Darstellung funktioneller Komponenten einer elektronischen Steuereinheit des Fahrzeugs aus Fig. 1; und
- Fig. 9: zeigt eine Frontansicht eines Fahrzeugs mit zwei A-Säulen-Anordnungen.

In den Figuren sind gleiche oder funktionsgleiche Elemente mit denselben Bezugszeichen versehen worden, sofern nichts anderes angegeben ist.

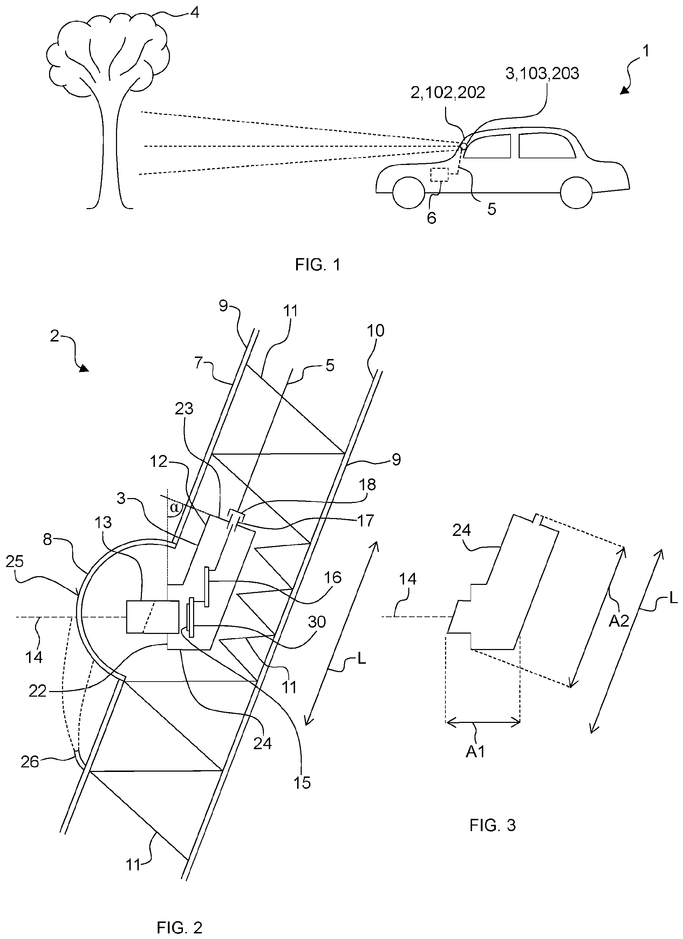

Fig. 1 zeigt ein Kraftfahrzeug 1. Das Kraftfahrzeug 1 ist in dem Beispiel ein Personenkraftwagen. In anderen Beispielen kann das Kraftfahrzeug 1 auch ein Lastkraftwagen, Bus oder ein anderes Kraftfahrzeug sein. Das Kraftfahrzeug 1 weist zwei A-Säulen-Anordnungen 2, 102, 202 auf. In jeder der A-Säulen-Anordnungen 2, 102, 202 ist eine Kamera 3, 103, 203 integriert. In der Seitenansicht von Fig. 1 ist nur die aus Fahrersicht linke A-Säulen-Anordnung 2, 102, 202 mit der Kamera 3, 103, 203 zu sehen. Die Kameras 3, 103, 203 sind dazu eingerichtet, einen vor dem Fahrzeug 1 liegenden Bereich zu überwachen. Im Beispiel von Fig. 1 erfasst die Kamera 3, 103, 203 einen sich vor dem Fahrzeug 1 im Sichtfeld der Kamera 3, 103, 203 befindlichen Baum 4. Die Kameras 3, 103, 203 sind beispielsweise dazu eingerichtet, auch einen zentral vor dem Fahrzeug 1 liegenden Bereich zu überwachen.

Die Kameras 3, 103, 203 können zum Beispiel für verschiedene Fahrunterstützungsfunktionen verwendet werden, wie beispielsweise für eine Objekterkennung, eine Spurhalteassistenz, eine Spurwechselassistenz, eine Fernlichtassistenz, eine Autobahnassistenz und einen Staupiloten.

Im Folgenden wird die in Fig. 1 sichtbare Kamera 3, 103, 203 in der aus Fahrersicht linken A-Säulen-Anordnung 2, 102, 202 beschrieben, wobei die Kamera in der rechten A-Säulen-Anordnung 2, 102, 202 genauso ausgestaltet sein kann.

Wie in Fig. 1 gezeigt, ist die Kamera 3, 103, 203 beispielsweise über eine Datenleitung 5 mit einer Steuervorrichtung 6 des Fahrzeugs 1 verbunden. Die Steuervorrichtung 6 ist beispielsweise Teil einer zentralen elektronischen Steuervorrichtung (ECU, Electronic Control Unit).

Fig. 2 zeigt eine A-Säulen-Anordnung 2 des Fahrzeugs 1 aus Fig. 1 gemäß einer ersten Ausführungsform. Die A-Säulen-Anordnung 2 weist eine A-Säule 7, eine teilweise innerhalb der A-Säule 7 montierte Kamera 3 und eine transparente Abdeckung 8 auf.

Die A-Säule 7 weist eine Außenstruktur 9 auf. Die Außenstruktur 9 weist beispielsweise entsprechend geformte Bleche auf, die einen Hohlraum 10 bilden. In dem Hohlraum 10 ist eine Trägerstruktur 11 angeordnet. Die Trägerstruktur verleiht der A-Säule 7 Stabilität, um zum Beispiel bei einem Unfall mit Seitenanprall die Insassen vor Verletzungen zu schützen. Die Trägerstruktur 11 ist in Fig. 2 lediglich schematisch gezeichnet und es kann jede bekannte Trägerstruktur als die Trägerstruktur 11 verwendet werden.

Die Kamera 3 weist ein Gehäuse 12 auf. Weiterhin weist die Kamera 3 ein Objektiv 13 auf. Bezugszeichen 14 bezeichnet eine optische Achse des Objektivs 13. Die Kamera 3 weist außerdem innerhalb ihres Gehäuses 12 eine erste Platine 14 auf. Auf der ersten Platine 14 ist dem Objektiv 13 zugewandt ein Bildsensor 15 angebracht. Der Bildsensor 15 ist zum Beispiel eine CCD-Kamera (Charged Coupled Device) oder ein CMOS-Sensor. Beispielsweise ist der Bildsensor 15 ein in CMOS-Technologie realisierter Aktiv-Pixel-Sensor (CMOS-APS, CMOS active pixel sensor). Das Objektiv 13 ist beispielsweise mithilfe eines Objektivhalters (nicht gezeigt) mechanisch an der ersten Platine 14 befestigt, sodass es vor dem Bildsensor 15 angeordnet ist.

Die Kamera 3 weist beispielsweise eine zweite Platine 16 auf, die mit der ersten Platine 14 elektrisch verbunden ist. Die zweite Platine 16 ist in Bezug auf den Bildsensor 15 hinter der ersten Platine 14 angeordnet. Außerdem ist die zweite Platine 16 relativ zur ersten Platine 14 nach oben versetzt (in Bezug auf die optische Achse 14 nach oben versetzt) angeordnet.

Weiterhin weist die Kamera 3 ein kameraseitiges Verbindungselement 17 zur elektrischen Verbindung der Kamera 3 mit einem fahrzeugseitigen Verbindungselement 18 auf. Das kameraseitige Verbindungselement 17 und das fahrzeugseitige Verbindungselement 18 sind zum Beispiel jeweils Steckverbinder.

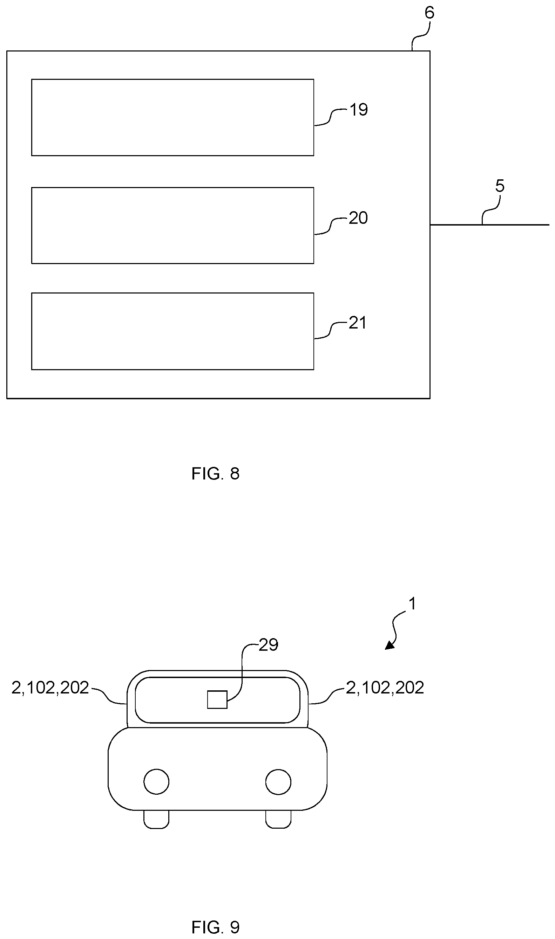

Die Kamera 3 ist beispielsweise eine sogenannte "Satelliten-Kamera", die in ihrem Gehäuse 12 lediglich die Abbildungsoptik (Objektiv 13) und den Bildsensor 15 jedoch keinen Bild-/Videoprozessor, Speicher oder Steuereinrichtung aufweist. Dadurch kann die Kamera 3 kompakt gestaltet werden. Die Bilddaten der von der Kamera 3 aufgenommenen Bilder werden in diesem Fall über die Datenleitung 5 an einen außerhalb der Kamera 3 und außerhalb der A-Säule 7 angeordneten Bild-/Videoprozessor 19 gesendet und dort verarbeitet (Fig. 8). Außerdem werden die Bilddaten der Kamera 3 auf einen außerhalb der Kamera 3 und außerhalb der A-Säule 7 angeordneten Speicher 20 gespeichert. Weiterhin wird die Kamera 3 über die Datenleitung 5 durch eine außerhalb der Kamera 3 und außerhalb der A-Säule 7 angeordnete Steuereinrichtung 21 gesteuert. Der externe Bild-/Videoprozessor 19, der externe Speicher 20 und die externe Steuereinrichtung 21 sind im Fahrzeug 1, z. B. in der zentralen elektronischen Steuereinrichtung 6 (Fig. 8) des Fahrzeugs 1, angeordnet.

In der in Fig. 2 gezeigten ersten Ausführungsform ist das Objektiv 13 an einer ersten Gehäusewand 22 der Kamera 3 angeordnet, und ist das kameraseitige Verbindungselement 17 an einer zweiten Gehäusewand 23 angeordnet. Die zweite Gehäusewand 23 ist relativ zur ersten Gehäusewand 22 geneigt, so dass zwischen ihnen ein Winkel α gebildet wird. Beispielsweise ist die zweite Gehäusewand 23 mit dem Verbindungselement 17 senkrecht zu einer Längsrichtung L der A-Säule 7 angeordnet. Dadurch kann ein Kabelabgang von der Kamera 3 (Verbindungselemente 17, 18, Kabel 5) entlang der Längsrichtung der A-Säule 7 erfolgen.

Dadurch, dass die Kamera 3 eine "Satelliten-Kamera" ist, die zweite Platine 16 relativ zur ersten Platine 14 nach oben versetzt ist und der Kabelabgang von der Kamera 3 entlang der Längsrichtung L der A-Säule 7 erfolgt, kann ein von der Kamera 3 innerhalb der A-Säule 7 eingenommener Raum 24 (Fig. 2, 3) eine kleinere Abmessung A1 parallel zu einer Sehlinie (hier der optischen Achse 14) der Kamera 3 aufweisen als seine Abmessung A2 parallel zur Längsrichtung L der A-Säule 7 ist.

Fig. 3 zeigt diesen von der Kamera 3 innerhalb der A-Säule 7 eingenommenen Raum 24. Der Raum 24 wird durch die umhüllende Form des kameraseitigen Verbindungselements 17, des Kameragehäuses 12 und desjenigen Teils des Objektivs 13, das sich innerhalb der A-Säule 7 befindet definiert.

Durch diese vorteilhafte Ausgestaltung und Anordnung der Kamera 3 in der A-Säule 7 kann ein Aushöhlen der Trägerstruktur 11 zum Einbau der Kamera 3 verringert werden. Damit bleibt die A-Säule 7 trotz integrierter Kamera 3 stabil. Außerdem ist ein Verbreitern der A-Säule 7, das zu einem größeren toten Winkel für den Fahrer führen würde, nicht notwendig.

Die transparente Abdeckung 8 der A-Säulen-Anordnung 2 ist kuppelförmig gestaltet, wie in Fig. 2 zu sehen. Sie ist an der Außenstruktur 9 der A-Säule 7 befestigt. Die transparente Abdeckung 8 weist eine äußere Oberfläche 25 auf, die mittels einer Reinigungsvorrichtung 26 gereinigt werden kann. Die Reinigungsvorrichtung 26 weist zum Beispiel eine oder mehrere Spritzdüsen auf.

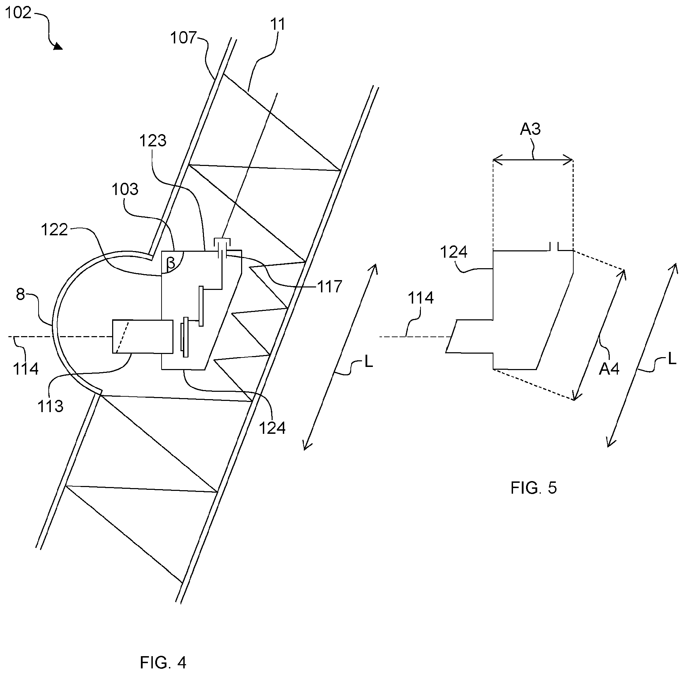

Fig. 4 zeigt eine A-Säulen-Anordnung 102 des Fahrzeugs 1 aus Fig. 1 gemäß einer zweiten Ausführungsform. Die A-Säulen-Anordnung 102 der zweiten Ausführungsform (Fig. 4, 5) unterscheidet sich von der A-Säulen-Anordnung 2 der ersten Ausführungsform (Fig. 2, 3) durch eine unterschiedliche Anordnung der ersten und zweiten Gehäusewand 122, 123. Bei der zweiten Ausführungsform ist die zweite Gehäusewand 123, die das Verbindungselement 117 aufweist, relativ zur ersten Gehäusewand 122, an der sich das Objektiv 113 befindet, in einem rechten Winkel β angeordnet. Außerdem grenzt die zweite Gehäusewand 123 unmittelbar an die erste Gehäusewand 122.

Fig. 5 zeigt einen von der Kamera 103 der zweiten Ausführungsform innerhalb der A-Säule 107 eingenommenen Raum 124. Eine Abmessung A3 dieses Raums 124 parallel zur Sehlinie (hier die optische Achse 14) ist kleiner als eine Abmessung A4 dieses Raumes 124 parallel zur Längsrichtung L der A-Säule 107.

Andere Merkmale der zweiten Ausführungsform sind ähnlich der entsprechenden Merkmale der ersten Ausführungsform und auf ihre wiederholte Beschreibung wird hier verzichtet.

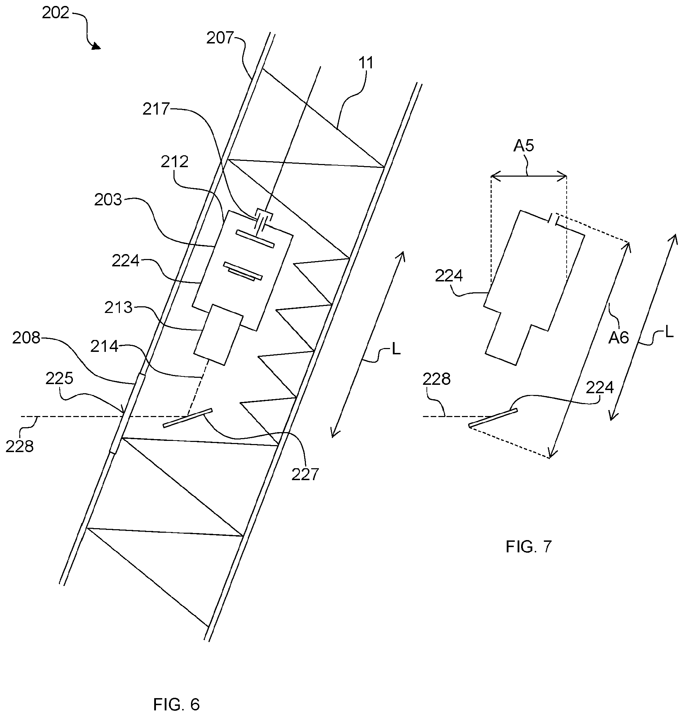

Fig. 6 zeigt eine A-Säulen-Anordnung 202 des Fahrzeugs 1 aus Fig. 1 gemäß einem Beispiel, das nicht Teil der beanspruchten Erfindung ist.

Die A-Säulen-Anordnung 202 gemäss dem Beispiel (Fig. 6, 7) unterscheidet sich von der A-Säulen-Anordnung 2 der ersten Ausführungsform (Fig. 2, 3) dadurch, dass die Kamera 203 einen Umlenkspiegel 227 aufweist, und durch eine andersartige Ausrichtung der optischen Achse 214 der Kamera 203. Ein Objektiv 213 der Kamera 203 ist so angeordnet, dass seine optische Achse 214 parallel zur Längsrichtung L der A-Säule 207 verläuft. Damit kann auch bei einem langen Objektiv 213, zum Beispiel einem Teleobjektiv, die Kamera 203 in Bezug auf einen Durchmesser der A-Säule 207 (d.h. in Bezug auf einen Querschnitt der A-Säule senkrecht zur Längsrichtung L der A-Säule 207) klein gestaltet werden. Zum Erfassen von Objekten vor dem Fahrzeug 1 (z. B. dem Baum 4 in Fig. 1) mittels der Kamera 203, weist die Kamera 203 den vor dem Objektiv 213 angeordneten Umlenkspiegel 227 auf. Der Umlenkspiegel 227 dient dazu, einen von einem Objekt 4 vor dem Fahrzeug 1 gemäß der Sehlinie 228 einfallenden Lichtstrahl auf das Objektiv 213 umzulenken. Der Umlenkspiegel 227 ist beispielsweise in einem Winkel von 45° relativ zur optischen Achse 214 des Objektivs 213 angeordnet. Der Umlenkspiegel 227 ist beispielsweise mittels einer Halterung (nicht gezeigt) an dem Objektiv 213 befestigt. Alternativ kann der Umlenkspiegel auch innerhalb der A-Säule 207 befestigt sein.

Fig. 7 zeigt einen von der Kamera 203 innerhalb der A-Säule 207 eingenommenen Raum 224, gemäss einem Beispiel, das nicht Teil der beanspruchten Erfindung ist. In diesem Beispiel ist die Kamera 203 vollständig innerhalb der A-Säule 207 angeordnet (Fig. 6). Deshalb wird der von der Kamera 203 innerhalb der A-Säule 207 eingenommene Raum 224 durch eine umhüllende Form begrenzt, die das Gehäuse 212, das Verbindungselement 217, das Objektiv 213, den Umlenkspiegel 227 und ggf. eine Halterung des Umlenkspiegels 227 gemeinsam umhüllt. Wie in Fig. 7 zu sehen, ist eine Abmessung A5 dieses Raums 224 parallel zur Sehlinie 228 kleiner als eine Abmessung A6 dieses Raumes 224 parallel zur Längsrichtung L der A-Säule 207.

Dadurch kann der von der Kamera 203 innerhalb der A-Säule 207 eingenommene Raum 224 in Bezug auf einen Querschnitt der A-Säule 207 (d.h. in Bezug auf einen Querschnitt der A-Säule 207 senkrecht zur Längsrichtung L der A-Säule 207) klein gehalten werden, selbst dann, wenn beispielsweise ein längeres Objektiv (z. B. Teleobjektiv) verwendet wird.

Die A-Säulen-Anordnung 202 dieses Beispeils weist eine transparente Abdeckung 208 auf. Zur Reinigung einer äußeren Oberfläche 225 der transparente Abdeckung 208, kann die A-Säulen-Anordnung 202 der dritten Ausführungsform auch eine Reinigungsvorrichtung ähnlich der Reinigungsvorrichtung 26 der Ausführungsform aufweisen.

Fig. 9 zeigt eine Frontansicht eines Fahrzeugs 1 mit zwei A-Säulen-Anordnungen. Das Fahrzeug 1 ist beispielsweise ein autonom oder teilautonom fahrendes Fahrzeug. Jede der zwei A-Säulen-Anordnungen in Fig. 9 kann eine A-Säulen-Anordnung 2 gemäß der ersten Ausführungsform (Fig. 2, 3), eine A-Säulen-Anordnung 102 gemäß der zweiten Ausführungsform (Fig. 4, 5) oder eine A-Säulen-Anordnung 202 gemäß der dritten Ausführungsform (Fig. 6, 7) sein.

Die in Fig. 9 innerhalb der A-Säulen 7, 107, 207 der A-Säulen-Anordnungen 2, 102, 202 montierten Kameras 3, 103, 203 sind beispielsweise jeweils hochauflösende Kameras mit einem Teleobjektiv zur Überwachung eines Fernbereichs vor dem Fahrzeug 1, insbesondere auch zentral vor dem Fahrzeug 1.

Außerdem weist das Fahrzeug 1 in Fig. 9 eine zentral montierte Frontkamera 29 mit einem Normalobjektiv oder einem Weitwinkelobjektiv auf zur Überwachung eines Nahbereichs vor dem Fahrzeug 1, insbesondere auch zentral vor dem Fahrzeug 1, auf. Die zentral montierte Frontkamera 29 ist beispielsweise hinter einer Windschutzscheibe des Fahrzeugs 1 angebracht. Die zentral montierte Frontkamera 29 ist beispielsweise eine Kamera mittlerer räumlicher Auflösung.

Dadurch, dass das Fahrzeug 1 in Fig. 9 sowohl die beiden in den A-Säulen der A-Säulen-Anordnungen 2, 102, 202 verbauten Telekameras als auch die zentral montierte Weitwinkel- oder Normalwinkelkamera 29 aufweist, kann die Umgebung vor dem Fahrzeug 1 mittels dreier Kameras und zwar sowohl im Fernbereich als auch im Nahbereich überwacht werden.

### BEZUGSZEICHENLISTE

- 1: Fahrzeug
- 2, 102, 202: A-Säulen-Anordnung
- 3, 103, 203: Kamera
- 4: Objekt
- 5: Datenleitung
- 6: Steuervorrichtung
- 7, 107, 207: A-Säule
- 8, 208: transparente Abdeckung
- 9: Außenstruktur
- 10: Hohlraum
- 11: Trägerstruktur
- 12, 112, 212: Gehäuse
- 13, 113, 213: Objektiv
- 14, 114, 214: optische Achse
- 15: Bildsensor
- 16: Platine
- 17, 117, 217: Verbindungselement
- 18: Verbindungselement
- 19: Bildprozessor
- 20: Speicher
- 21: Steuereinrichtung
- 22, 122: Gehäusewand
- 23, 123: Gehäusewand
- 24, 124, 224: Raum
- 25, 225: Oberfläche
- 26: Reinigungsvorrichtung
- 227: Umlenkspiegel
- 228: Sehlinie
- 29: Kamera
- 30: Platine

- A1-A6: Abmessung
- L: Längsrichtung

## Patentansprüche

1. Kamera (3, 103, 203) für ein Fahrzeug (1), welche dazu eingerichtet ist:
mindestens teilweise innerhalb einer A-Säule (7, 107, 207) des Fahrzeugs (1) montiert zu werden, und Bilddaten eines Bereichs vor dem Fahrzeug (1) aufzunehmen,
die Kamera aufweisend ein Gehäuse (12, 112) und ein Objektiv (13, 113),
**dadurch gekennzeichnet, dass**
die Kamera (3, 103, 203) dazu eingerichtet ist derart in der A-Säule (7, 107, 207) angeordnet zu werden, dass ein von der Kamera (3, 103, 203) innerhalb der A-Säule (7, 107, 207) eingenommener Raum (24, 124, 224) eine kleinere maximale Abmessung (A1, A3, A5) parallel zu einer Sehlinie (14, 114, 228) der Kamera (3, 103, 203) aufweist als seine maximale Abmessung (A2, A4, A6) parallel zu einer Längsrichtung (L) der A-Säule (7, 107, 207) ist,
die Kamera (3, 103, 203) aufweisend:
- eine erste Platine (30), die in dem Gehäuse (12, 112) angeordnet ist,
- einen Bildsensor (15), der auf der ersten Platine (30) angebracht ist, wobei die Haupterstreckungsebene der ersten Platine (30) senkrecht zu einer optischen Achse (14, 114) des Objektivs angeordnet ist und sich der Bildsensor (15) im Strahlengang des Objektivs (13, 113) befindet, und
- eine zweite Platine (16), die in dem Gehäuse (12, 112) angeordnet ist und mit der ersten Platine (30) elektrisch verbunden ist, wobei die zweite Platine (16) bezogen auf den Bildsensor (15) hinter der ersten Platine (30) und relativ zur optischen Achse (14, 114) des Objektivs (13, 113) nach oben versetzt zur ersten Platine (30) angeordnet ist.

2. Kamera (3, 103, 203) nach Anspruch 1, wobei die Kamera (3, 103, 203) ein Teleobjektiv (13, 113, 213) aufweist und dazu eingerichtet ist, Bilddaten eines Fernbereichs vor dem Fahrzeug (1) aufzunehmen.

3. Kamera (3, 103, 203) nach Anspruch 1 oder 2, aufweisend:
ein Verbindungselement (17, 117, 217), das an dem Gehäuse (12, 112, 212) angebracht ist und für eine Verbindung der Kamera (3, 103, 203) mit einem fahrzeugseitigen Verbindungselement (18) eingerichtet ist,
wobei die Kamera (3, 103, 203) dazu eingerichtet ist, derart in der A-Säule (7, 107, 207) angeordnet zu werden, dass ein von dem Gehäuse (12, 112, 212), dem Objektiv (13, 113, 213) und dem Verbindungselement (17, 117, 217) innerhalb der A-Säule (7, 107, 207) eingenommener Raum (24, 124, 224) eine kleinere maximale Abmessung (A1, A3, A5) parallel zur Sehlinie (14, 114, 228) der Kamera (3, 103, 203) aufweist als seine maximale Abmessung (A2, A4, A6) parallel zur Längsrichtung (L) der A-Säule (7, 107, 207) ist.

4. Kamera (3, 103) nach einem der vorhergehenden Ansprüche, wobei die Kamera (3, 103) dazu eingerichtet ist, derart in der A-Säule (7, 107) angeordnet zu werden, dass ein Objektiv (13, 113) der Kamera (3, 103) aus der A-Säule (7, 107) in Fahrzeugrichtung nach vorne vorsteht.

5. Kamera (3, 103) nach einem der vorhergehenden Ansprüche, wobei das Objektiv (13, 113), das an einer ersten Gehäusewand (22, 122) angeordnet ist, und
ein Verbindungselement (17, 117) zur Verbindung der Kamera (3, 103) mit einem fahrzeugseitigen Verbindungselement (18), wobei das Verbindungselement (17, 117) an einer zweiten Gehäusewand (23, 123) angeordnet ist, und die zweite Gehäusewand (23, 123) mit der ersten Gehäusewand (22, 122) einen Winkel (α, β) bildet.

6. Kamera (3, 103, 203) nach einem der vorhergehenden Ansprüche, wobei die Kamera (3, 103, 203) ein Verbindungselement (17, 117, 217) aufweist, das dazu eingerichtet ist, mit einem fahrzeugseitigen Verbindungselement (18) verbunden zu werden, um von der Kamera (3, 103, 203) aufgenommene Bilddaten an einen außerhalb der Kamera (3, 103, 203) angeordneten Bildprozessor (19) zu senden, von der Kamera (3, 103, 203) aufgenommene Bilddaten auf einem außerhalb der Kamera (3, 103, 203) angeordneten Speicher (20) zu speichern, Steuerbefehle einer außerhalb der Kamera (3, 103, 203) angeordneten Steuereinheit (21) zu empfangen und/oder die Kamera (3, 103, 203) mit Strom zu versorgen.

7. A-Säulen-Anordnung (2, 102, 202) für ein Fahrzeug (1), aufweisend:
eine A-Säule (7, 107, 207) und eine Kamera (3, 103, 203),
**gekennzeichnet durch** die Kamera (3, 103, 203) gemäß einem der vorhergehenden Ansprüche,
wobei die Kamera (3, 103, 203) derart ausgestaltet und in der A-Säule (7, 107, 207) angeordnet ist, dass ein von der Kamera (3, 103, 203) innerhalb der A-Säule (7, 107, 207) eingenommener Raum (24, 124, 224) eine kleinere maximale Abmessung (A1, A3, A5) parallel zu einer Sehlinie (14, 114, 228) der Kamera (3, 103, 203) aufweist als seine maximale Abmessung (A2, A4, A6) parallel zu einer Längsrichtung (L) der A-Säule (7, 107, 207) ist.

8. A-Säulen-Anordnung nach Anspruch 7 mit einer transparenten Abdeckung (8, 208), wobei die Kamera (3, 103, 203) dazu eingerichtet ist, Bilder von einem Bereich vor dem Fahrzeug (1) durch die transparente Abdeckung (8, 208) hindurch aufzunehmen.

9. A-Säulen-Anordnung nach Anspruch 8, wobei die transparente Abdeckung (8, 208) eine geringe optische Verzerrung aufweist.

10. A-Säulen-Anordnung nach Anspruch 8 oder 9, wobei die transparente Abdeckung (8) kuppelförmig ist.

11. A-Säulen-Anordnung nach einem der Ansprüche 8 - 10, wobei die transparente Abdeckung (8, 208) eine äußere Oberfläche (25, 225) aufweist, und die A-Säulen-Anordnung eine Reinigungsvorrichtung (26) aufweist zur Reinigung zumindest eines Teils der äußeren Oberfläche (25, 225) der transparenten Abdeckung (8, 208).

12. Fahrzeug (1) **gekennzeichnet durch** mindestens eine A-Säulen-Anordnung gemäß einem der Ansprüche 7 - 11.

13. Fahrzeug gemäß Anspruch 12, aufweisend:
zwei A-Säulen-Anordnungen (2, 102, 202) gemäß einem der Ansprüche 7 - 11, wobei die innerhalb der A-Säulen (7, 107, 207) montierten Kameras (3, 103, 203) jeweils ein Teleobjektiv (13, 113, 213) aufweisen, und
eine zentral montierte Frontkamera (29) mit einem Normalobjektiv oder einem Weitwinkelobjektiv.

## Claims

1. Camera (3, 103, 203) for a vehicle (1), which is configured:
to be mounted at least partially inside an A-pillar (7, 107, 207) of the vehicle (1), and to record image data of an area in front of the vehicle (1),
the camera having a housing (12, 112) and a lens (13, 113),
**characterized in that**
the camera (3, 103, 203) is configured to be arranged in the A-pillar (7, 107, 207) in such a way that a space (24, 124, 224) occupied by the camera (3, 103, 203) inside the A-pillar (7, 107, 207) has a smaller maximum dimension (A1, A3, A5) in parallel to a line of sight (14, 114, 228) of the camera (3, 103, 203) than its maximum dimension (A2, A4, A6) is in parallel to a longitudinal direction (L) of the A-pillar (7, 107, 207),
the camera (3, 103, 203) having:
- a first circuit board (30), which is arranged in the housing (12, 112),
- an image sensor (15), which is arranged on the first circuit board (30), wherein the main extension plane of the first circuit board (30) is arranged perpendicular to an optical axis (14, 114) of the lens and the image sensor (15) is located in the beam path of the lens (13, 113), and
- a second circuit board (16), which is arranged in the housing (12, 112) and is electrically connected to the first circuit board (30), wherein the second circuit board (16) is arranged behind the first circuit board (30) with respect to the image sensor (15) and offset upward in relation to the first circuit board (30) relative to the optical axis (14, 114) of the lens (13, 113).

2. Camera (3, 103, 203) according to Claim 1, wherein the camera (3, 103, 203) has a telephoto lens (13, 113, 213) and is configured to record image data of a long range in front of the vehicle (1).

3. Camera (3, 103, 203) according to Claim 1 or 2, having:
a connecting element (17, 117, 217), which is attached to the housing (12, 112, 212) and is configured for a connection of the camera (3, 103, 203) to a vehicle-side connecting element (18),
wherein the camera (3, 103, 203) is configured to be arranged in the A-pillar (7, 107, 207) in such a way that a space (24, 124, 224) occupied by the housing (12, 112, 212), the lens (13, 113, 213), and the connecting element (17, 117, 217) inside the A-pillar (7, 107, 207) has a smaller maximum dimension (A1, A3, A5) in parallel to the line of sight (14, 114, 228) of the camera (3, 103, 203) than its maximum dimension (A2, A4, A6) is in parallel to the longitudinal direction (L) of the A-pillar (7, 107, 207).

4. Camera (3, 103) according to any of the preceding claims, wherein the camera (3, 103) is configured to be arranged in the A-pillar (7, 107) in such a way that a lens (13, 113) of the camera (3, 103) protrudes forward out of the A-pillar (7, 107) in the vehicle direction.

5. Camera (3, 103) according to any of the preceding claims, wherein the lens (13, 113), which is arranged on a first housing wall (22, 122), and
a connecting element (17, 117) for connecting the camera (3, 103) to a vehicle-side connecting element (18), wherein the connecting element (17, 117) is arranged on a second housing wall (23, 123), and the second housing wall (23, 123) forms an angle (α, β) with the first housing wall (22, 122).

6. Camera (3, 103, 203) according to any of the preceding claims, wherein the camera (3, 103, 203) has a connecting element (17, 117, 217), which is configured to be connected to a vehicle-side connecting element (18), in order to transmit image data recorded by the camera (3, 103, 203) to an image processor (19) arranged outside the camera (3, 103, 203), to store image data recorded by the camera (3, 103, 203) on a memory (20) arranged outside the camera (3, 103, 203), to receive control commands of a control unit (21) arranged outside the camera (3, 103, 203), and/or to supply the camera (3, 103, 203) with power.

7. A-pillar arrangement (2, 102, 202) for a vehicle (1), having:
an A-pillar (7, 107, 207) and a camera (3, 103, 203), **characterized by** the camera (3, 103, 203) according to any of the preceding claims,
wherein the camera (3, 103, 203) is designed and arranged in the A-pillar (7, 107, 207) in such a way that a space (24, 124, 224) occupied by the camera (3, 103, 203) inside the A-pillar (7, 107, 207) has a smaller maximum dimension (A1, A3, A5) in parallel to a line of sight (14, 114, 228) of the camera (3, 103, 203) than its maximum dimension (A2, A4, A6) is in parallel to a longitudinal direction (L) of the A-pillar (7, 107, 207).

8. A-pillar arrangement according to Claim 7, having a transparent cover (8, 208), wherein the camera (3, 103, 203) is configured to record images of an area in front of the vehicle (1) through the transparent cover (8, 208).

9. A-pillar arrangement according to Claim 8, wherein the transparent cover (8, 208) has a low optical distortion.

10. A-pillar arrangement according to Claim 8 or 9, wherein the transparent cover (8) is dome-shaped.

11. A-pillar arrangement according to any of Claims 8-10, wherein the transparent cover (8, 208) has an outer surface (25, 225), and the A-pillar arrangement has a cleaning device (26) for cleaning at least a part of the outer surface (25, 225) of the transparent cover (8, 208) .

12. Vehicle (1), **characterized by** at least one A-pillar arrangement according to any of Claims 7-11.

13. Vehicle according to Claim 12, having:
two A-pillar arrangements (2, 102, 202) according to any of Claims 7-11, wherein the cameras (3, 103, 203) mounted inside the A-pillars (7, 107, 207) each have a telephoto lens (13, 113, 213), and
a centrally mounted front camera (29) having a normal lens or a wide-angle lens.

## Revendications

1. Caméra (3, 103, 203) destinée à un véhicule (1), conçue pour :
être montée au moins en partie à l'intérieur d'un montant de pare-brise (7, 107, 207) du véhicule (1) et acquérir des données d'image d'une zone située à l'avant du véhicule (1),
la caméra comportant un boîtier (12, 112) et un objectif (13, 113),
**caractérisée en ce que**
la caméra (3, 103, 203) est conçue pour être disposée dans le montant de pare-brise (7, 107, 207) de manière qu'un espace (24, 124, 224) occupé par la caméra (3, 103, 203) à l'intérieur du montant de pare-brise (7, 107, 207) présente une dimension (A1, A3, A5) maximale parallèlement à une ligne de visée (14, 114, 228) de la caméra (3, 103, 203) qui est inférieure à sa dimension (A2, A4, A6) maximale parallèlement à une direction longitudinale (L) du montant de pare-brise (7, 107, 207), la caméra (3, 103, 203) comportant :
- une première carte de circuit imprimé (30) disposée dans le boîtier (12, 112),
- un capteur d'image (15) monté sur la première carte de circuit imprimé (30), le plan d'extension principal de la première carte de circuit imprimé (30) étant disposé perpendiculairement à un axe optique (14, 114) de l'objectif et le capteur d'image (15) se trouvant sur le chemin de faisceau de l'objectif (13, 113), et
- une deuxième carte de circuit imprimé (16) disposée dans le boîtier (12, 112) et reliée électriquement à la première platine (30), la deuxième carte de circuit imprimé (16) étant disposée derrière la première carte de circuit imprimé (30) par rapport au capteur d'image (15) et décalée vers le haut par rapport à la première carte de circuit imprimé (30) et par rapport à l'axe optique (14, 114) de l'objectif (13, 113).

2. Caméra (3, 103, 203) selon la revendication 1, la caméra (3, 103, 203) comportant un téléobjectif (13, 113, 213) et étant conçue pour acquérir des données d'image d'une zone éloignée située à l'avant du véhicule (1).

3. Caméra (3, 103, 203) selon la revendication 1 ou 2, comportant :
un élément de liaison (17, 117, 217) monté sur le boîtier (12, 112, 212) et conçu pour relier la caméra (3, 103, 203) à un élément de liaison (18) côté véhicule,
la caméra (3, 103, 203) étant conçue pour être disposée dans le montant de pare-brise (7, 107, 207) de manière qu'un espace (24, 124, 224) occupé par le boîtier (12, 112, 212), l'objectif (13, 113, 213) et l'élément de liaison (17, 117, 217) à l'intérieur du montant de pare-brise (7, 107, 207) présente une dimension (A1, A3, A5) maximale parallèlement à la ligne de visée (14, 114, 228) de la caméra (3, 103, 203) qui est inférieure à sa dimension (A2, A4, A6) maximale parallèlement à la direction longitudinale (L) du montant de pare-brise (7, 107, 207).

4. Caméra (3, 103) selon l'une quelconque des revendications précédentes, la caméra (3, 103) étant conçue pour être disposée dans le montant de pare-brise (7, 107) de manière qu'un objectif (13, 113) de la caméra (3, 103) fasse saillie vers l'avant dans le sens de la marche du véhicule par rapport au montant de pare-brise (7, 107).

5. Caméra (3, 103) selon l'une quelconque des revendications précédentes, l'objectif (13, 113) étant disposé sur une première paroi de boîtier (22, 122), et un élément de liaison (17, 117) étant prévu pour relier la caméra (3, 103) à un élément de liaison (18) côté véhicule, l'élément de liaison (17, 117) étant disposé sur une deuxième paroi de boîtier (23, 123), et la deuxième paroi de boîtier (23, 123) formant un angle (α, β) avec la première paroi de boîtier (22, 122).

6. Caméra (3, 103, 203) selon l'une quelconque des revendications précédentes, la caméra (3, 103, 203) comportant un élément de liaison (17, 117, 217) qui est conçu pour être relié à un élément de liaison (18) côté véhicule pour envoyer des données d'image acquises par la caméra (3, 103, 203) à un processeur d'image (19) disposé à l'extérieur de la caméra (3, 103, 203), stocker des données d'image acquises par la caméra (3, 103, 203) dans une mémoire (20) disposée à l'extérieur de la caméra (3, 103, 203), recevoir des instructions de commande en provenance d'une unité de commande (21) disposée à l'extérieur de la caméra (3, 103, 203) et/ou alimenter la caméra (3, 103, 203) en courant.

7. Ensemble montant de pare-brise (2, 102, 202) destiné à un véhicule (1), comportant :
un montant de pare-brise (7, 107, 207) et une caméra (3, 103, 203),
**caractérisé par** la caméra (3, 103, 203) selon l'une quelconque des revendications précédentes,
la caméra (3, 103, 203) étant conçue pour être disposée dans le montant de pare-brise (7, 107, 207) de manière qu'un espace (24, 124, 224) occupé par la caméra (3, 103, 203) à l'intérieur du montant de pare-brise (7, 107, 207) présente une dimension (A1, A3, A5) maximale parallèlement à une ligne de visée (14, 114, 228) de la caméra (3, 103, 203) qui est inférieure à sa dimension (A2, A4, A6) maximale parallèlement à une direction longitudinale (L) du montant de pare-brise (7, 107, 207).

8. Ensemble montant de pare-brise selon la revendication 7, comprenant un cache transparent (8, 208), la caméra (3, 103, 203) étant conçue pour acquérir des images d'une zone située à l'avant du véhicule (1) à travers le cache transparent (8, 208).

9. Ensemble montant de pare-brise selon la revendication 8, le cache transparent (8, 208) présentant une faible distorsion optique.

10. Ensemble montant de pare-brise selon la revendication 8 ou 9, le cache transparent (8) étant en forme de dôme.

11. Ensemble montant de pare-brise selon l'une quelconque des revendications 8 à 10, le cache transparent (8, 208) présentant une surface extérieure (25, 225) et l'ensemble montant de pare-brise comportant un dispositif de nettoyage (26) pour nettoyer au moins une partie de la surface extérieure (25, 225) du cache transparent (8, 208).

12. Véhicule (1) **caractérisé par** au moins un ensemble montant de pare-brise selon l'une quelconque des revendications 7 à 11.

13. Véhicule selon la revendication 12, comportant :
deux ensembles montants de pare-brise (2, 102, 202) selon l'une quelconque des revendications 7 à 11, les caméras (3, 103, 203) montées à l'intérieur des montants de pare-brise (7, 107, 207) comportant =- respectivement un téléobjectif (13, 113, 213), et
une caméra avant (29) montée de manière centrale comprenant un objectif normal ou un objectif grand angle.
